# EUROPEAN PATENT SPECIFICATION

(11) **EP 1 607 598 B1**
(45) Date of publication and mention of the grant of the patent: **18.07.2007**
(21) Application number: 05104701.7
(22) Date of filing: 31.05.2005
(51) Int. Cl.: F01N 7/18, F16L 27/111, F16L 51/02

(54) **Decoupling joint for combustion engine exhaust pipes**
Entkopplungsverbindung für Abgasleitungen von Brennkraftmaschinen
Joint de découplage pour tuyau d'échappement de moteurs a combustion interne

(30) Priority: 01.06.2004 IT TO20040371
(43) Date of publication of application: 21.12.2005
(73) Proprietor: FLEXIDER S.r.l., 10156 Torino (IT)
(72) Inventor: Debernardi, Gianfranco, 10030 Villareggia (IT)
(74) Representative: Jorio, Paolo

(56) References cited:
- EP-A- 0 736 679
- DE-A1- 19 924 476
- US-A- 5 813 704
- US-B1- 6 240 969
- PATENT ABSTRACTS OF JAPAN vol. 008, no. 274 (M-345), 14 December 1984 (1984-12-14) & JP 59 145321 A (TOYOTA JIDOSHA KK), 20 August 1984 (1984-08-20)

## Description

The present invention relates to a decoupling joint, for combustion engine exhaust pipes, which is highly effective and cheap and easy to produce.

As is known, modern automotive combustion engine exhaust systems are equipped with one or more flexible sleeves - here and hereinafter referred to generally as "decoupling joints" - located between the engine and the end of the exhaust pipe to compensate for any misalignment/positioning errors of the various exhaust pipe portions, and/or to reduce/eliminate vibration transmitted from the engine to the exhaust system in general and in particular to delicate parts of the system, such as catalytic purifiers (so-called "catalytic mufflers").

As described, for example, in EP 0 657 683, such decoupling joints comprise a fluidtight, bellows-type, flexible metal sleeve, in turn provided with one or more non-fluidtight, flexible metal reinforcing sleeves, and with damping members interposed between the bellows and at least one of the reinforcing sleeves; in actual use, the above described decoupling joints are located at least along the pipe portion between the engine and the catalytic muffle, i.e. in a relatively inaccessible, cramped area.

Though relatively effective, particularly the one described in EP 0 657 683, known decoupling joints have the drawback of comprising numerous component parts, which increase the manufacturing cost, size, and weight of the joint. Also the joint shown in US6240969B1 is complex and expensive to assemble.

It is therefore an object of the invention to solve the above problem by providing a decoupling joint which is compact and lightweight, cheap to produce, and highly effective in terms of working life, vibration damping, and noise reduction.

According to the present invention, there is provided a decoupling joint, for combustion engine exhaust pipes, as claimed in Claim 1.

More specifically, the decoupling joint comprises a fluidtight, flexible metal sleeve in the form of a bellows and having a number of first undulations; and at least one damping member in the form of a wire mesh pad force-fitted into contact with the first undulations of the sleeve. The damping member is locked axially with respect to the sleeve and directly on the sleeve itself - e.g. at second undulations of the sleeve, located close to respective smooth cylindrical connecting ends of the sleeve - by means of respective opposite end portions of the damping member, which are compressed axially to form respective annular locking portions of compacted wire mesh, which rest axially against respective sides of end undulations of the sleeve, e.g. are seated and rest axially inside respective gaps between the first and second undulations.

Said gaps are preferably annular, and are each defined between a crest of a respective said second undulation, and a said first undulation adjacent to the second undulation. The second undulations are smaller in radial height than the first undulations, and the damping member in the form of a wire mesh pad is shaped as a cylindrical sleeve, which is radially interference-fitted onto and radially outwards of the flexible sleeve.

The resulting decoupling joint is thus extremely straightforward and lightweight, comprising only two members connected by simply deforming one of the two permanently, i.e. with no need for welding or even upsetting, which calls for calibrating the upset ends.

At the same time, the joint has surprisingly proved highly effective and reliable in damping vibration and reducing noise. That is, in use, the damping member - defined by the wire mesh sleeve pad locked axially and interference-fitted onto the outside of the bellows, by stretching the sleeve pad radially to its elastic limit at assembly - grips the crests of the bellows undulations tightly, and creates sufficient friction to produce a positive variation in the dynamic characteristics of the bellows, which is no longer subject to resonance risks at operating frequencies, while still remaining highly flexible.

The external wire mesh pad may be made of sufficiently tight mesh to actually protect the bellows externally, and, by virtue of the original way in which it is fastened, by axially compacting the wire mesh, needs no other external members, such as a braided wire sleeve, or end members, such as rigid annular endpieces, for assembly to the bellows.

Though additional internal or external components may be added to the bellows, these are not essential to effective operation of the joint.

A non-limiting embodiment of the invention will be described by way of example with reference to the accompanying drawings, in which:
Figure 1 shows a longitudinal side view, partly in radial section, of a decoupling joint in accordance with the invention;
Figures 2 and 3 show larger-scale, schematic details of the Figure 1 decoupling joint;
Figures 4 and 5 show the Figure 3 detail in accordance with two variations of the invention.

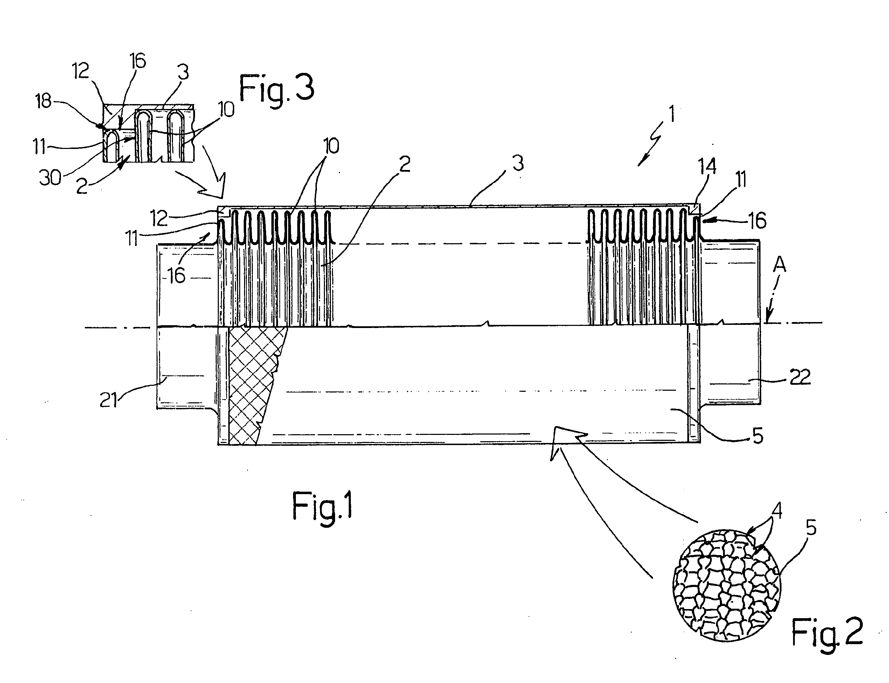

With reference to Figures 1 to 3, number 1 indicates as a whole a decoupling joint for combustion engine exhaust pipes (known and not shown for the sake of simplicity).

Decoupling joint 1 is symmetrical with respect to a longitudinal axis A, and, in the non-limiting example shown (Figure 1), comprises a fluidtight flexible metal sleeve 2 in the form of a bellows; and a damping member defined by a pad in the form of a flexible cylindrical sleeve 3 made of mesh 4 (Figure 2) of wire 5, externally coaxial with and even protecting bellows sleeve 2 (hereinafter referred to simply as "bellows 2"), and preferably interference-fitted onto and radially outwards of flexible bellows sleeve 2.

Bellows sleeve 2 comprises a number of annular first undulations 10; and second end undulations 11 (at least one for each end of bellows sleeve 2).

Sleeve pad 3, made of mesh 4 of wire 5, is force-fitted into contact with at least some of annular first undulations 10 of bellows 2, and preferably, in the examples shown, with all of annular undulations 10, i.e. along the whole length of the undulated portion of bellows 2.

According to a basic characteristic of the invention, the damping member defined by cylindrical sleeve pad 3 is locked axially with respect to, and directly on, bellows sleeve 2. In the non-limiting example in Figures 1, 2 and 3, cylindrical sleeve pad 3 is locked axially with respect to bellows sleeve 2 at second end undulations 11, which are annular.

More specifically, the damping member defined by sleeve pad 3 is locked axially and directly onto bellows sleeve 2 by means of opposite locking portions 12, 14 of the damping member.

According to the invention, locking portions 12, 14 are formed by axially compressing and radially containing (in a manner obvious to anyone skilled in the art, e.g. using an appropriate die) respective corresponding opposite annular end portions of the damping member defined by cylindrical sleeve pad 3, so that locking portions 12, 14 are defined by axially compacted mesh 4 of wire 5.

Annular locking portions 12, 14 are seated and rest axially inside respective annular gaps 16 defined between second undulations 11 and first undulations 10. More specifically, annular gaps 16 are each defined between a crest 18 (Figure 3) of a respective undulation 11, and the undulation 10 adjacent to the respective undulation 11 and respective crest 18.

Undulations 11 are smaller in radial height than undulations 10, and are end undulations of bellows sleeve 2, located adjacent to the end undulations 10 and adjacent to (and therefore close to) respective smooth cylindrical connecting ends 21, 22 of bellows sleeve 2. In use, the whole of joint 1 is connected in known and fluidtight manner to the exhaust pipes by means of cylindrical connecting ends 21,22.

The damping member, in the form of pad 3 made of mesh 4 of wire 5 and in the shape of a cylindrical sleeve, therefore extends the whole length of bellows 2, with the exception of smooth cylindrical ends 21, 22, and, by virtue of the way it is assembled, as described in detail below, grips the crests of all the first undulations 10 radially inwards and with a predetermined force.

In other words, locking portions 12, 14 are defined by opposite annular ends of the damping member in the form of pad 3 made of mesh 4 of wire 5 and in the shape of a cylindrical sleeve; which ends, when permanently deformed as described above, project radially inwards of pad 3, and so have an inside diameter smaller than the rest of pad 3.

Ends 12, 14 rest radially, at opposite ends, on respective crests 18 of undulations 11 - which are smaller in radial height than undulations 10, but have the same inside diameter - and rest axially, with substantially no clearance, against respective opposite sides 30, facing ends 21, 22 respectively, of the undulations 10 immediately adjacent to undulations 11 (Figure 3).

To simplify manufacture, annular end locking portions 12, 14 preferably have a substantially rectangular radial section, but may obviously be made of any other appropriate shape.

Sleeve pad 3 and flexible bellows sleeve 2 are manufactured separately, and joint 1 then assembled as follows.

Firstly, sleeve pad 3 - which is made of roughly the same length as bellows 2, including smooth ends 21, 22 - is interference-fitted lengthwise onto the crests of undulations 10, by stretching it radially outwards to its elastic limit using a known tool, to form a semifinished part.

Joint 1 is then formed from the semifinished part by axially compressing (and radially containing by means of a die, in a manner obvious to anyone skilled in the art) the opposite ends of sleeve pad 3 projecting axially from crests 18 of end undulations 11 over ends 21, 22.

When compressed axially, mesh 4 is compacted and increases in density to permanently deform the projecting ends of sleeve pad 3, which are consequently shortened and expand radially. Since, during permanent deformation, the ends of sleeve pad 3 are contained radially outwards by a known die, not shown for the sake of simplicity, they can only expand radially inwards, thus completely filling the annular gaps 16 defined between adjacent undulations 11, 10 at ends 21, 22. Locking portions 12, 14 are thus formed, and, as described above, are end portions of sleeve pad 3, which rest axially, at opposite ends, against opposite sides 30 to lock sleeve pad 3 axially to bellows 2, at both ends 21 and 22, with no additional members required.

A known additional member, such as a braided wire sleeve or a flexible sleeve made of wound, clinched metal strip, may therefore be added as an optional component part of the joint according to the invention, e.g. as an inner liner of bellows 2 (to conduct the exhaust gas and possibly also limit deformation of the bellows in elongation) or as an external part of pad 3, but, according to the invention, is not essential either to fasten pad 3 or to ensure effective in-service vibration damping or noise reduction.

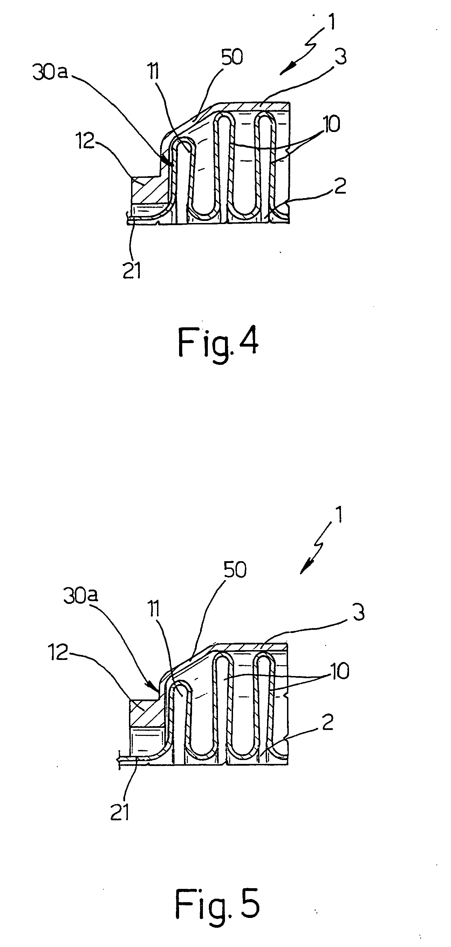

In the Figure 4 and 5 variations, all else described being equal, pad 3 may be locked axially by portions 12, 14 differently from as shown in Figure 2, and in particular without employing gaps 16, which may therefore be dispensed with.

In the variations shown, sleeve pad 3 is locked directly on smooth ends 21, 22 of bellows sleeve 2, and in particular against sides 30a of lower end undulations 11 of bellows 2. End undulations 11 of bellows 2 (in a further variation, not shown for the sake of simplicity) may even be the same height as (i.e. not shorter than) undulations 10, and therefore identical to undulations 10 to eliminate gaps 16.

The Figure 4 and 5 variations are assembled in exactly the same way as described above, except for the form of the dies for producing compressed, compacted portions 12, 14. Also, in the case of shorter end undulations 11, sleeve pad 3 comprises truncated-cone-shaped end portions 50 connecting end locking portions 12, 14 to the portion interference-fitted radially onto undulations 10.

## Claims

1. A decoupling joint (1) for combustion engine exhaust pipes, comprising a fluidtight, flexible metal bellows sleeve (2) in turn comprising a number of annular first undulations (10); and at least one damping member (3) in the form of a pad made of wire mesh (4, 5) and force-fitted into contact with at least the annular said first undulations (10) of the bellows sleeve (2); the damping member (3) is locked axially with respect to the bellows sleeve (2), and directly on the bellows sleeve itself, close to smooth cylindrical connecting ends (21, 22) of the bellows sleeve; wherein
i) said damping member (3) is in the form of a pad made of wire mesh (4, 5), which is in the shape of a cylindrical sleeve interference-fitted onto and radially outwards of the flexible bellows sleeve (2); **characterized in that**:
ii) said damping member (3) is locked axially and directly on the bellows sleeve (2) by means of locking portions (12; 14), on the damping member, defined by opposite annular ends of the damping member which project radially inwards thereof so as to have an inside diameter smaller than the rest of said pad (3);
iii) said ends defining said locking portions (12; 14) being formed by compacted wire mesh (4, 5) increased in density; having being formed by permanently deformed by compression respective opposite end portions of said pad (3) so as said ends (12; 14) rest axially, at opposite ends, against opposite sides (30; 30a) of said bellows (2).

2. A joint (1) as claimed in Claim 1, **characterized in that** said damping member (3) is locked axially at annular second undulations (11) of the bellows sleeve (2); said locking portions (12; 14), defined by compacted wire mesh (4, 5), being seated and resting axially inside respective gaps (16) defined between the annular said first (10) and second (11) undulations.

3. A joint (1) as claimed in Claim 2, **characterized in that** said gaps (16) are annular gaps, each defined between a crest (18) of a respective second undulation (11), and a said first undulation (10) adjacent to the respective second undulation (11); the second undulations being smaller in radial height than the first undulations (10).

4. A joint (1) as claimed in Claim 2 or 3, **characterized in that** said second undulations (11) are end undulations of said bellows sleeve (2), located close to said smooth cylindrical connecting ends (21, 22) of the bellows sleeve (2).

5. A joint (1) as claimed in Claim 1, **characterized in that** said damping member (3), in the form of a pad made of wire mesh (4, 5) and in the shape of a cylindrical sleeve, extends the whole length of said bellows sleeve (2), with the exception of said smooth cylindrical connecting ends (21, 22), and grips the crests of all said first undulations (10) radially inwards with a given force.

6. A, joint (1) as claimed in Claim 5, **characterized in that** said annular ends (12, 14), projecting radially inwards of the pad (3), rest radially on respective crests (18) of second undulations (11) smaller in radial height than the first undulations (10) but of the same inside diameter, and rest axially, with substantially no clearance, against respective sides (30) of first undulations (10) adjacent to said second undulations (11).

7. A joint (1) as claimed in Claim 6, **characterized in that** said annular ends (12; 14), projecting radially inwards of the pad (3), are substantially rectangular in radial section.

8. A joint (1) as claimed in Claim 1, **characterized in that** said damping member (3), in the form of a pad made of wire mesh (4, 5) and in the shape of a cylindrical sleeve, is locked directly to said smooth cylindrical connecting ends (21, 22) of the bellows sleeve (2), and in particular against sides (30a) of end undulations (11) of the bellows sleeve (2).

9. A joint (1) as claimed in Claim 8, **characterized in that** said end undulations (11) of the bellows sleeve (2) are shorter in height.

10. A joint (1) as claimed in Claim 9, **characterized in that** said damping member (3), in the form of a pad made of wire mesh (4, 5) and in the shape of a cylindrical sleeve, has truncated-cone-shaped end portions (50) connecting the end locking portions (12, 14) to the portion interference-fitted radially onto said first undulations (10).

## Patentansprüche

1. Entkopplungsverbindung (1) für Abgasleitungen für Brennkraftmaschinen, die eine fluiddichte, flexible Faltenbalgmuffe (2) aus Metall umfasst, die ihrerseits eine Anzahl ringförmiger erster Wellungen (10) aufweist; und ferner mindestens ein Dämpfelement (3) in Form eines Kissens (4, 5) aus Drahtgeflecht, das in Kontakt mit mindestens den ringförmigen ersten Wellungen (10) der Faltenbalgmuffe (2) gepresst wird, wobei das Dämpfelement (3) axial mit Bezug auf die Faltenbalgmuffe (2) und unmittelbar auf der Faltenbalgmuffe selbst, nahe den glatten, zylindrischen Verbindungsenden (21, 22) der Faltenbalgmuffe befestigt ist; wobei
i) das Dämpfelement (3) in Form eines Kissens aus Drahtgeflecht (4, 5) vorliegt, das die Form einer zylindrischen Muffe hat, die auf der und radial außerhalb der flexiblen Faltenbalgmuffe (2) festsitzend angebracht ist; **dadurch gekennzeichnet, dass**:
ii) das Dämpfelement (3) mittels Befestigungsteilen (12, 14) axial und unmittelbar auf der Faltenbalgmuffe (2) befestigt ist, wobei die Befestigungsteile auf dem Dämpfelement von einander gegenüber angeordneten, ringförmigen Enden des Dämpfelements begrenzt sind, die radial einwärts desselben vorspringen, um einen Innendurchmesser zu haben, der kleiner ist als der Rest des Kissens (3);
iii) wobei die Enden die Befestigungsteile (12, 14) begrenzen, die von verdichtetem Drahtgeflecht (4, 5) mit erhöhter Dichte ausgebildet sind und die durch permanente Kompressionsverformung mit Bezug auf die gegenüber angeordneten Endabschnitte des Kissens (3) ausgebildet wurden, so dass die Enden (12, 14) axial auf gegenüber liegenden Enden an gegenüber liegenden Seiten (30, 30a) des Faltenbalgs (2) aufliegen.

2. Verbindung (1) gemäß Anspruch 1, **dadurch gekennzeichnet, dass** das Dämpfelement (3) axial an ringförmigen zweiten Wellungen (11) der Faltenbalgmuffe (2) befestigt ist, wobei die Befestigungsteile (12, 14), die von verdichtetem Drahtgeflecht (4, 5) begrenzt sind, axial innerhalb entsprechender Zwischenräume (16) eingesetzt sind und aufliegen, welche zwischen den ringförmigen ersten (10) und zweiten (11) Wellungen begrenzt sind.

3. Verbindung (1) gemäß Anspruch 2, **dadurch gekennzeichnet, dass** die Zwischenräume (16) ringförmige Zwischenräume sind, die jeweils zwischen einem Scheitel (18) einer entsprechenden zweiten Wellung (11) und einer ersten Wellung (10) angrenzend an die zweite Wellung (11) begrenzt sind, wobei die zweiten Wellungen in ihrer radialen Höhe kleiner sind als die ersten Wellungen (10).

4. Verbindung (1) gemäß Anspruch 2 oder 3, **dadurch gekennzeichnet, dass** die zweiten Wellungen (11) Endwellungen der Faltenbalgmuffe (2) sind, die nahe an den glatten zylindrischen Anschlussenden (21, 22) der Faltenbalgmuffe (2) angeordnet sind.

5. Verbindung (1) gemäß Anspruch 1, **dadurch gekennzeichnet, dass** sich das Dämpfelement (3) - mit der Ausnahme der glatten zylindrischen Verbindungsenden (21, 22) - in Form eines Kissens aus Drahtgeflecht (4, 5) und in Form einer zylindrischen Muffe über die gesamte Länge der Faltenbalgmuffe (2) erstreckt und die Scheitel aller ersten Wellungen (10) radial einwärts mit einer bestimmten Kraft erfasst.

6. Verbindung (1) gemäß Anspruch 5, **dadurch gekennzeichnet, dass** die ringförmigen Enden (12, 14), die radial einwärts des Kissens (3) vorstehen, radial auf den entsprechenden Scheiteln (18) der zweiten Wellungen (11) aufliegen, die in ihrer radialen Höhe kleiner sind als die ersten Wellungen (10), doch den gleichen Innendurchmesser aufweisen, und axial und im wesentlichen ohne Abstand an den entsprechenden Seiten (30) der ersten Wellungen (10) angrenzend an die zweiten Wellungen (11) aufliegen.

7. Verbindung (1) gemäß Anspruch 6, **dadurch gekennzeichnet, dass** die ringförmigen Enden (12, 14), die radial einwärts von dem Kissen (3) vorstehen, einen im wesentlichen rechteckigen Radialquerschnitt aufweisen.

8. Verbindung (1) gemäß Anspruch 1, **dadurch gekennzeichnet, dass** das Dämpfelement (3) in Form eines Kissens aus Drahtgeflecht (4, 5) und in Form einer zylindrischen Muffe direkt an den glatten zylindrischen Verbindungsenden (21, 22) der Faltenbalgmuffe (2) befestigt ist, insbesondere an den Seiten (30a) der Endwellungen (11) der Faltenbalgmuffe (2).

9. Verbindung (1) gemäß Anspruch 8, **dadurch gekennzeichnet, dass** die Endwellungen (11) der Faltenbalgmuffe (2) eine kleinere Höhe aufweisen.

10. Verbindung (1) gemäß Anspruch 9, **dadurch gekennzeichnet, dass** das Dämpfelement (3) in der Form eines Kissens aus Drahtgeflecht (4, 5) und in Form einer zylindrischen Muffe kegelstumpfförmige Endabschnitte (50) aufweist, welche die Endverbindungsteile (12, 14) mit dem Abschnitt verbinden, der radial festgesetzt auf den ersten Wellungen (10) angeordnet ist.

## Revendications

1. Joint de découplage (1) pour tuyaux d'échappement de moteur à combustion, comprenant un manchon de soufflet (2) métallique flexible, étanche, comprenant à son tour un certain nombre de premières ondulations annulaires (10) ; et au moins un élément amortisseur (3) sous forme d'un patin en treillis de fils métalliques (4, 5) et monté par force au contact d'au moins lesdites premières ondulations annulaires (10) du manchon de soufflet (2) ; l'élément amortisseur (3) est bloqué axialement par rapport au manchon de soufflet (2), et directement sur le manchon de soufflet lui-même, à proximité d'extrémités de connexion cylindriques lisses (21, 22) du manchon de soufflet ; dans lequel
i) ledit élément amortisseur (3) est sous forme d'un patin en treillis de fils métalliques (4, 5), qui prend la forme d'un manchon cylindrique ajusté par serrage sur et radialement vers l'extérieur du manchon de soufflet flexible (2) ; **caractérisé en ce que** ;
ii) ledit élément amortisseur (3) est bloqué axialement et directement sur le manchon de soufflet (2) au moyen de parties de blocage (12 ;14), sur l'élément amortisseur, défini par des extrémités annulaires opposées de l'élément amortisseur qui sont en saillie radiale vers l'intérieur de celui-ci de sorte à avoir un diamètre intérieur inférieur au reste dudit patin (3) ;
iii) lesdites extrémités définissant lesdites parties de blocage (12 ; 14) étant formées par un treillis de fils métalliques compacté (4, 5) de densité accrue ; ayant été formées par déformation permanente par compression de parties d'extrémités opposées respectives dudit patin (3) de sorte que lesdites extrémités (12 ; 14) s'appuient axialement, à des extrémités opposées, contre des côtés opposés (30 ; 30a) dudit soufflet (2).

2. Joint (1) selon la revendication 1, **caractérisé en ce que** ledit élément amortisseur (3) est bloqué axialement à des deuxièmes ondulations annulaires (11) du manchon de soufflet (2) ; lesdites parties de blocage (12 ; 14), définies par un treillis de fils métalliques compacté (4, 5), étant logées et s'appuyant axialement à l'intérieur d'espaces respectifs (16) définis entre lesdites premières (10) et deuxièmes (11) ondulations annulaires.

3. Joint (1) selon la revendication 2, **caractérisé en ce que** lesdits espaces (16) sont des espaces annulaires, chacun étant défini entre une crête (18) d'une deuxième ondulation (11) respective, et une dite première ondulation (10) adjacente à la deuxième ondulation (11) respective ; les deuxièmes ondulations étant d'une hauteur radiale inférieure à celle des premières ondulations (10).

4. Joint (1) selon la revendication 2 ou 3, **caractérisé en ce que** lesdites deuxièmes ondulations (11) sont des ondulations d'extrémité dudit manchon de soufflet (2), situées près desdites extrémités de connexion cylindriques lisses (21, 22) du manchon de soufflet (2).

5. Joint (1) selon la revendication 1, **caractérisé en ce que** ledit élément amortisseur (3), sous forme d'un patin en treillis de fils métalliques (4, 5) et sous forme d'un manchon cylindrique, s'étend sur toute la longueur dudit manchon de soufflet (2), à l'exception desdites extrémités de connexion cylindriques lisses (21, 22), et serre les crêtes de toutes lesdites premières ondulations (10) radialement vers l'intérieur avec une force donnée.

6. Joint (1) selon la revendication 5, **caractérisé en ce que** lesdites extrémités annulaires (12 ; 14), en saillie radiale vers l'intérieur du patin (3), s'appuient radialement sur des crêtes (18) respectives de deuxièmes ondulations (11) d'une hauteur radiale inférieure à celle des premières ondulations (10) mais de même diamètre intérieur, et s'appuient axialement, sensiblement sans espace, contre des côtés respectifs (30) de premières ondulations (10) adjacentes auxdites deuxièmes ondulations (11).

7. Joint (1) selon la revendication 6, **caractérisé en ce que** lesdites extrémités annulaires (12 ; 14), en saillie radiale vers l'intérieur du patin (3), sont sensiblement rectangulaires en coupe radiale.

8. Joint (1) selon la revendication 1, **caractérisé en ce que** ledit élément amortisseur (3), sous forme d'un patin en treillis de fils métalliques (4, 5) et sous forme d'un manchon cylindrique, est bloqué directement sur lesdites extrémités de connexion cylindriques lisses (21, 22) du manchon de soufflet (2), et en particulier contre des côtés (30a) d'ondulations d'extrémité (11) du manchon de soufflet (2).

9. Joint (1) selon la revendication 8, **caractérisé en ce que** lesdites ondulations d'extrémité (11) du manchon de soufflet (2) sont moins hautes.

10. Joint (1) selon la revendication 9, **caractérisé en ce que** ledit élément amortisseur (3), sous forme d'un patin en treillis de fils métalliques (4, 5) et sous forme d'un manchon cylindrique, présente des parties d'extrémité sous forme de cône tronqué (50) reliant les parties de blocage d'extrémité (12, 14) à la partie ajustée par serrage de manière radiale sur lesdites premières ondulations (10).
